(19) Europäisches Patentamt
European Patent Office
Office européen des brevets

(11) **EP 1 301 563 B1**

(12) # FASCICULE DE BREVET EUROPEEN

(45) Date de publication et mention de la délivrance du brevet:
**12.10.2005 Bulletin 2005/41**

(21) Numéro de dépôt: **01956474.9**

(22) Date de dépôt: **15.06.2001**

(51) Int Cl.$^7$: **C08K 5/00**, C08G 69/00, C08L 77/00

(86) Numéro de dépôt international:
**PCT/EP2001/006726**

(87) Numéro de publication internationale:
**WO 2001/096456 (20.12.2001 Gazette 2001/51)**

(54) **Procédés de fabrication de compositions à base de polymères thermoplastiques et d'une solution concentrée à base de polyamide**

Verfahren zur Herstellung von Zusammensetzungen auf der Basis thermoplastischer Polymere und einer konzentrierten Lösung auf Grundlage von Polyamid

Methods for making compositions on the basis of thermoplastic polymers and a polyamide based masterbatch

(84) Etats contractants désignés:
**AT BE CH CY DE DK ES FI FR GB GR IE IT LI LU MC NL PT SE TR**

(30) Priorité: **16.06.2000 FR 0007704**

(43) Date de publication de la demande:
**16.04.2003 Bulletin 2003/16**

(73) Titulaire: **Rhodia Engineering Plastics Srl**
**20020 Ceriano Laghetto (MI) (IT)**

(72) Inventeurs:
- **DI SILVESTRO, Giuseppe**
  **I- Lentate Sul Seveso (IT)**
- **SPERONI, Franco**
  **I- Ceriano Laghetto (IT)**
- **YUAN, Cuiming**
  **I-20126 Milano (IT)**
- **ZHANG, Haichun**
  **I-21047 Saronno (IT)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**EP-A1- 0 682 057**
**WO-A1-99/03909**
**FR-A1- 2 743 077**
**FR-A1- 2 779 730**

EP 1 301 563 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne de solutions concentrées à base de polyamide, permettant d'améliorer la qualité des compositions obtenues à l'aide de ces solutions ou d'améliorer la performance de leurs procédés d'obtention.

Pour la fabrication d'objets à base de polyamides, par exemple des articles moulés, des films, des fils, fibres ou filaments, on utilise la plupart du temps des compositions comportant le polyamide et des additifs. Ces additifs sont destinés à modifier et améliorer le comportement du polyamide au regard de certaines propriétés. On cite par exemple la stabilité à la chaleur ou à la lumière, la coloration, les propriétés thermomécaniques, l'ignifugation.

Ces additifs peuvent aussi aider à la fabrication des compositions et articles obtenus à partir de celles-ci. Il peut par exemple s'agir de catalyseurs, ou de lubrifiants.

Pour réaliser des compositions polymères contenant des additifs, il est connu d'utiliser des solutions concentrées thermoplastiques. Ces solutions concentrées sont des compositions comprenant une matrice thermoplastique et l'additif, de préférence en concentration relativement élevée, et destinées à être mélangées en phase fondue avec le polymère auquel on souhaite ajouter l'additif. La solution concentrée est en général introduite sous forme de granulés dans un dispositif d'extrusion.

Ce mode d'incorporation présente plusieurs avantages. Il peut permettre d'obtenir avec un bon contrôle des compositions très diluées en additif, il peut permettre de réaliser facilement plusieurs types de compositions sur une même ligne, sans qu'il soit nécessaire d'adapter la ligne à la forme de l'additif. Tous ces avantages sont connus de l'homme du métier.

Il existe ainsi dans le commerce des solutions concentrées thermoplastiques comprenant des additifs utiles pour la réalisation de compositions polymères. Ces solutions concentrées diffèrent les unes des autres par la nature de la matrice, la nature et la concentration des additifs. Dans certains cas les solutions concentrées sont préparées en tant que produits intermédiaires pour les sociétés commercialisant les compositions finales ou les articles finis.

Afin d'obtenir les meilleures compositions possibles, on préfère généralement que la matrice de la solution concentrée utilisée pour l'incorporation des additifs soit de même nature ou de nature la plus proche possible du polymère à la base de la composition finale. Il est ainsi connu d'utiliser des matrices ou polyamide 6 ou 6.6 pour l'incorporation d'additifs dans des compositions à base de polyamide 6 ou 6.6. Cela est largement utilisé dans les domaines des plastiques techniques et de la fabrication d'articles filés.

D'une part l'utilisation de solutions concentrées induit des surcoûts de production, elle implique plusieurs processus de mélange en fondu : un pour la réalisation du mélange maître, et un pour l'incorporation au polymère de la composition. La fabrication et l'utilisation de solutions fortement concentrées limite le surcoût.

Un premier objet de l'invention est de proposer des solutions concentrées à base de polyamides nouvelles, à forte concentration en additifs.

D'autre part, certains additifs nécessitent des conditions particulières d'incorporation dans la matrice de la solution concentrée, puis dans les compositions finales. Ce sont par exemple les additifs instables à la chaleur induite par le chauffage et/ou le cisaillement produits lors de l'incorporation. Sur un autre plan, la chaleur et/ou le cisaillement peuvent provoquer des dégradations du polymère. Afin de limiter ces problèmes, il est connu d'utiliser des matrices spéciales comme l'EVA. Ce polymère est peu compatible avec le polyamide. Il est aussi connu d'utiliser des copolymères statistiques de polyamide 6, 6.6 et 6.10. Le coût de ces matrices est élevé. Dans le cas de la fabrication de compositions à base de polyamide 6 ou 6.6, elles induisent d'autre part l'incorporation de motifs récurrents différents, qui peuvent présenter une faible compatibilité avec le polyamide, et modifier les propriétés du polyamide.

Un deuxième objet de l'invention est de proposer des mélanges maîtres permettant de s'affranchir de ces difficultés en opérant à température et/ou cisaillement moindre avec une matrice à base d'unités polyamides et d'introduire un minimum d'unités non conformes au polymère.

L'invention propose donc un procédé de fabrication d'une composition polymère thermoplastique par melange en fondu d'une solution concentrée d'un plolymère thermoplastique, la solution concentrée comportant une matrice à base de polyamide un additif choisi parmi les ignifugeants, les pigments, les colorants, les stabilisants, les lubrifiants, les catalyseurs, les aides à la mise en forme, les nucléants, et leurs mélanges, caractérisée en ce que la matrice est un composé macromoléculaire comprenant

- des chaînes macromoléculaires étoiles ou H comportant un coeur et au moins trois branches polyamides liées au coeur,
- éventuellement des chaînes macromoléculaires polyamides linéaires, le rapport en poids entre les chaînes macromoléculaires étoiles et la somme des chaines macromoléculaires étoiles et linéaires étant compris entre 1 et 0,1 et en ce que l'indice de fluidité en fondu de la matrice mesuré selon la norme ISO 1133 à 275°C sous 100 g de charge est supérieur à 20 g/10 min;

la solution concentrée comprenant au moins 10% en poids d'additif.

Les solutions concentrées polyamide utilisées dans le procédé selon l'invention sont des produits industriels généralement conditionnés sous forme de granulés, et destinés à être utilisés pour la fabrication de compositions polymères comprenant des additifs. Ces compositions sont obtenues par mélange en fondu d'un polymère thermoplastique et de la solution concentrée, par exemple à l'aide d'un dispositif d'extrusion.

Les compositions obtenues sont mises en forme après une phase de mélange en fondu. Selon un premier processus la composition est mise en forme de granulés, qui seront par la suite refondus pour une mise en forme définitive. Selon un deuxième processus les compositions sont mises en forme définitive juste après la phase de mélange, sans solidification ni refusion intermédiaires. A titre d'exemples de mises en formes définitives on cite le moulage par injection, l'extrusion, le filage.

Les solutions concentrées comprenant une matrice thermoplastique et un additif sont généralement destinées à être utilisées pour la fabrication de compositions polymères comprenant des additifs. En général les solutions concentrées sont très concentrées en additif par rapport aux compositions polymériques pour lesquelles elles sont destinées, ces compositions étant généralement très diluées en additif. Pour la plupart des additifs, on peut considérer qu'une solution concentrée comprend au moins 10% en poids d'additif.

Selon une caractéristique préférentielle de l'invention, la proportion en poids en additif dans la solution concentrée est supérieure ou égale à 10 %.

La solution concentrée utilisée dans le procédé selon l'invention comporte un additif et une matrice, caractérisé en ce que la matrice est un composé macromoléculaire dont les caractéristiques ont été mentionnées plus haut. L'invention concerne également l'utilisation de ces composés macromoléculaires à titre de matrice de solution concentrée polyamide.

La matrice de la solution concentrée comporte des chaînes macromoléculaires étoiles ou H. De telles chaînes ou des polymères comprenant de telles chaînes sont par exemple décrites dans les documents FR 2.743.077, FR 2.779.730, US 5.959.069, EP 0.632.703, EP 0.682.057 et EP 0.832.149. Ces composés sont connus pour présenter une fluidité améliorée par rapport à des polyamides linéaires. L'indice de fluidité de la matrice, mesuré selon la norme ISO 1133 à 275°C sous une charge de 100 g, est supérieur à 20 g/10 min.

Les chaînes macromoléculaires étoiles ou H sont obtenues par utilisation d'un composé multifonctionnel présentant au moins trois fonctions réactives, toutes les fonctions réactives étant identiques. Ce composé peut être utilisé comme comonomère en présence d'autres monomères dans un procédé de polymérisation. Il peut également être mis en présence d'un polyamide au cours d'une étape d'extrusion.

Les chaînes macromoléculaires étoiles ou H comportent un coeur et au moins trois branches polyamides. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Elles peuvent présenter des branchements, c'est notamment le cas pour les structures H. Les chaînes polyamides constituant les branches sont de préférence du type de celles obtenues par polymérisation des lactames ou aminoacides, par exemple de type polyamide 6.

La matrice comprend éventuellement, outre les chaînes étoiles, des chaînes macromoléculaires polyamides linéaires. Le rapport en poids entre la quantité de chaînes étoiles dans la matrice et la somme des quantités de chaînes étoiles et linéaires est compris entre 1 et 0,1, bornes incluses. Il est de préférence compris entre 0,9 et 0,6.

Selon un premier procédé, la matrice peut être obtenue par copolymérisation à partir d'un mélange de monomères comprenant :

a) un composé multifonctionnel comprenant au moins trois fonctions réactives choisies parmi les amines, les acides carboxyliques, et leurs dérivés, toutes les fonctions réactives étant identiques,
b) des monomères de formules générales (IIa) et (IIb) suivantes :

$$X—R_2—Y \qquad \text{(IIa)}$$

ou

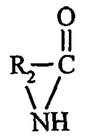

(IIb)

c) éventuellement des monomères de formule générale (III) suivante :

$$Z\text{-}R_3\text{-}Z \qquad \text{(III)}$$

dans lesquelles :

Z représente une fonction identique à celle des fonctions réactives du composé multifonctionnel

- $R_2$, $R_3$ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes,
- Y est une fonction amine primaire quand X représente une fonction acide carboxylique, ou
- Y est une fonction acide carboxylique quand X représente une fonction amine primaire

Par acide carboxylique, on entend les acides carboxyliques et leurs dérivés, tels que les anhydrides d'acide, les chlorures d'acide, les esters etc.
Par amine, on entend les amines et dérivés.

De tels procédés d'obtention sont décrits dans les documents FR2.743.077 et FR 2.779.730.
Dans le cas où on utilise un comonomère c), la réaction de polymérisation (polycondensation) est avantageusement effectuée jusqu'à l'atteinte de l'équilibre thermodynamique.
Le mélange de monomères peut comporter d'autres composés, tels que des limitateurs de chaînes, des catalyseurs, des additifs.
Ce procédé conduit à la formation de chaînes macromoléculaires étoiles, et
éventuellement de chaînes macromoléculaires linéaires. Le pourcentage PS en nombre de chaînes macromoléculaires étoiles par rapport au nombre total de chaînes est déterminé par les formules suivantes:

- dans le cas ou le composé multifonctionnel présente 4 fonctions réactives:

$$PS = \frac{4\,T_0\,X_d^{\,3}\,(1 - X_d) + T_0\,X_d^{\,4}}{N_0\,(1 - X_d) - 2R_0X_d - 4\,T_0\,X_d + R_0\,[1 - (1 - X_d)^2] + T_0\,[1 - (1 - X_d)^4]} \times 100$$

Dans laquelle:

$$X_d = 1 - \frac{[COOH]}{2\,R_0 + 4\,T_0 + N_0}$$

si les fonctions réactives sont des fonctions acides

$$X_d = 1 - \frac{N_0 - [NH2]}{2\,R_0 + 4\,T_0 + N_0}$$

si les fonctions réactives sont des fonctions amines
$T_0$ représente le nombre de moles de composé multifonctionnel
$N_0$ représente le nombre de moles initiales en monomère de formule (IIa) ou (IIb)
$R_0$ représente le nombre de moles initiales en monomère de formule (III)

- dans le cas ou le composé multifonctionnel présente 3 fonctions réactives:

$$PS = \frac{T_0 X_d^{\ 3}}{N_0 (1 - X_d) - R_0 X_d - 3 T_0 X_d + T_0 [1 - (1 - X_d)^3]} \times 100$$

Dans laquelle:

$$X_d = 1 - \frac{[COOH]}{2 R_0 + 3T_0 + N_0}$$

si les fonctions réactives sont des fonctions acides

$$X_d = 1 - \frac{N_0 - [NH2]}{2 R_0 + 3 T_0 + N_0}$$

si les fonctions réactives sont des fonctions amines
$T_0$ représente le nombre de moles de composé multifonctionnel
$N_0$ représente le nombre de moles initiales en monomère de formule (IIa) ou (IIb)
$R_0$ représente le nombre de moles initiales en monomère de formule (III)

Selon un deuxième procédé la matrice comporte des chaînes macromoléculaires H, obtenue par copolymérisation à partir d'un mélange de monomères comprenant:

a) 1 à 50 µmol par gramme de matrice d'un composé multifonctionnel comprenant au moins trois fonctions réactives choisies parmi les amines, les acides carboxyliques et leurs dérivés, les fonctions réactives étant identiques,
b) des lactames et/ou amino-acides
c) un composé multifonctionnel c) choisi parmi les acides dicarboxyliques ou les diamines,
d) un composé monofonctionnel dont la fonction est choisie parmi les amines, les acides carboxyliques et leurs dérivés,

les fonctions de c) et d) étant des amines lorsque les fonctions de a) sont des acides, les fonctions de c) et d) étant des acides lorsque les fonctions de a) sont des amines, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.
Un tel procédé et de tels polymères sont décrits dans le document US 5959069.
Selon un troisième procédé la matrice peut être obtenue par mélange en fondu, par exemple à l'aide d'un dispositif d'extrusion, d'un polyamide du type de ceux obtenus par polymérisation des lactames et/ou des aminoacides, et d'un composé multifonctionnel comprenant un coeur et au moins trois branches, dont toutes les branches présentent des fonctions terminales identiques, choisies parmi les amines, les acides carboxyliques et leurs dérivés. Le polyamide est par exemple du polyamide 6.
De tels procédés d'obtention sont décrits dans les documents EP 0.682.070 et EP 0.672.703.
Les composés multifonctionnels utilisés peuvent être choisis parmi les composés présentant une structure arborescente ou dendritique. Ils peuvent également être choisis parmi les composés représentés par la formule (I).

$$R1 - [-A - z\ ]_m \qquad (I)$$

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente une fonction amine primaire ou une fonction acide carboxylique
- m est un nombre entier compris entre 3 et 8.

Selon une caractéristique préférée, le radical $R_1$ est soit un radical cycloaliphatique tel que le radical tétravalent de cyclohexanonyle, soit un radical 1,1,1-triyie-propane, 1,2,3-triyle-propane.

Comme autres radicaux $R_1$ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation préféré de l'invention, le nombre m est supérieur à 3 et avantageusement égal à 3 ou 4.

La fonction réactive du composé multifonctionnel représentée par le symbole X-H est une fonction capable de former une fonction amide.

A titre d'exemple de composés polyfonctionnels de formule I, on peut citer la 2,2,6,6-tétra-(β-carboxyéthyl) cyclohexanone, le
diaminopropane - N,N,N',N' acide tétraacétique de formule suivante :

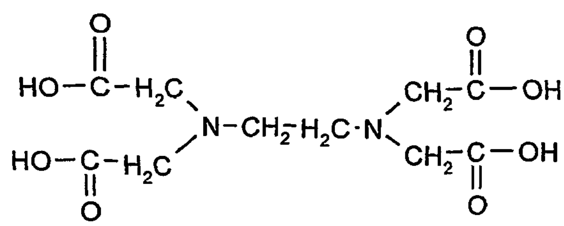

ou les composés provenant de la réaction du triméthylol propane ou du glycérol avec l'oxyde de propylène et amination des groupes hydroxyles terminaux, ces derniers composés sont commercialisés sous le nom commercial JEFFAMINES T® par la société HUNTSMAN, et ont comme formule générale :

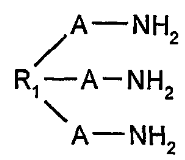

Dans laquelle :

- $R_1$ représente un radical 1,1,1-triyle propane, ou 1,2,3-triyle propane,
- A représente un radical polyoxyéthylènique.

Des exemples de composés multifonctionnels pouvant convenir sont notamment cités dans le document US 5346984, dans le document US 5959069, dans le document WO 9635739, dans le document EP 672703.

On cite plus particulièrement:
Les nitrilotrialkylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyle-1,8,octanediamine.
On cite aussi les dendrimères de formule (II)

$$(R_2\ N\text{-}(CH_2)_n)_2\text{-}N\text{-}(CH_2)_x\text{-}N\text{-}((CH_2)_n\text{-}NR_2)_2 \qquad (II)$$

dans laquelle
R est un atome d'hydrogène ou un groupement $-(CH_2)_n-NR^1_2$ où
$R^1$ est un atome d'hydrogène ou un groupement $-(CH_2)_n-NR^2_2$ où
$R^2$ est un atome d'hydrogène ou un groupement $-(CH_2)_n-NR^3_2$ où

$R^3$ est un atome d'hydrogène ou un groupement $-(CH_2)_n-NH_2$ ,
n étant un entier compris entre 2 et 6
x étant un entier compris entre 2 et 14.
n est de préférence un entier compris entre 3 et 4, en particulier 3, et x est de préférence un entier compris entre 2 et 6, de préférence compris entre 2 et 4, en particulier 2.
Chaque radical R peut être choisi indépendamment des autres . Le radical R est de préférence un atome d'hydrogène ou un groupement $-(CH_2)_n$-NH2.
On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyle, naphtyle, anthracényle, biphényle et triphényle, ou les hétérocycles comme les pyridine, bi pyridine, pyrrole, indole, furanne, thiophène, purine, quinoléine, phénanthrène, porphyrine, phthalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, plus particulièrement encore l'acide trimésique et l'acide 1,2,4,5-benzènetétracarboxylique.
On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes.
On cite plus particulièrement l'acide 2,4,6-triaminocaproïque-1,3,5-triazine (TACT).

Les additifs sont choisis parmi les ignifugeants, les pigments ou colorants, minéraux ou organométalliques, les catalyseurs de la polycondensation des polyamides, les aides à la mise en forme comme les cires, les stabilisants à la lumière et aux UV des polymères.

A titre d'exemple d'ignifugeants, on cite les composés phosphorés comme le phosphore rouge, le phosphore rouge enrobé ou passivé ; les composés halogénés comme le PDBS, les polystyrènes bromés : les composés à base de mélamine comme le cyanurate de mélamine, les composés à base d'oxydes d'hydroxyde de magnésium, les dérivés du zinc comme le borate de zinc, l'oxyde de zinc ou le stannate de zinc, le dioxyde d'antimoine.

L'additif peut être choisi parmi les colorants organiques ou organométalliques, les pigments ou colorants minéraux. A titre d'exemples de pigments, on cite les particules de dioxyde de titane, éventuellement enrobés, les noirs de carbone, les pigments à base de phtalocyanine, les pigments azotés.

Selon une caractéristique de l'invention, la proportion en poids en additif dans la solution concentrée polyamide est supérieure à 10 %.

Selon un mode de réalisation particulier l'additif est constitué de particules à base de dioxyde de titane, en concentration pondérale supérieure à 65 %.

Les solutions concentrées utilisées dans le procédé selon l'invention sont préparées par incorporation en fondu de l'additif dans la matrice. Cette opération est avantageusement réalisée à l'aide d'un dispositif d'extrusion, dans lequel la matière est fondue, véhiculée et éventuellement cisaillée. La quantité d'énergie communiquée au dispositif d'extrusion est avantageusement inférieure à celle nécessaire pour effectuer la même opération avec une matrice à base d'un polyamide linéaire. Les conditions d'extrusion sont avantageusement choisies de manière à ce que la température dans le dispositif d'extrusion ne soit pas trop élevée. On obtient dans ces conditions, une bonne dispersion de l'additif dans la matrice, même à concentration élevée.

Selon un mode de réalisation particulier de l'invention, la solution concentrée est obtenue par introduction dans un dispositif d'extrusion de l'additif, d'un composé multifonctionnel tel que défini ci-dessus, et d'un polyamide, au cours d'une même étape d'extrusion. Le procédé consiste à, simultanément, obtenir les chaînes macromoléculaire étoiles, et à introduire l'additif dans la matrice.

L'invention concerne un procédé de fabrication de compositions polymères, ainsi que des compositions polymère comprenant la solution polyamide concentrée.

Les compositions polymères sont obtenues par mélange en fondu, par exemple à l'aide d'un dispositif d'extrusion, d'un polymère thermoplastique et de la solution concentrée.

Le polymère thermoplastique est de préférence choisi parmi les polyamides, plus préférablement parmi les polymères à base de polyamide 6 ou de polyamide 6.6. Selon un mode préférentiel de l'invention 99 % en poids des motifs répétitifs des chaînes macromoléculaires comprises dans la composition sont choisis parmi les motifs récurrents du polyamide 6 et les motifs récurrents du polyamide 6.6.

Les compositions sont avantageusement obtenues par mélange en fondu à l'aide d'un dispositif d'extrusion du polymère thermoplastique et de la solution polyamide concentrée. La quantité d'énergie communiquée au dispositif pour la fusion, le transport et éventuellement le cisaillement de la matière est faible. Le profil de température au sein du dispositif d'extrusion est avantageusement ajusté de manière à éviter des dégradations du polymère thermoplastique.

D'autres détails ou avantages de l'invention apparaîtront plus clairement au vu des exemples donnés ci-dessous uniquement à titre indicatif.

Exemples 1 à 10

On réalise des solutions polyamides concentrées à partir de plusieurs additifs et de plusieurs types de matrices.
Matrice 1 : polyamide 6 de viscosité relative 37, mesurée dans l'acide formique.
Matrice 2 : polyamide 6 de viscosité relative 2,7, mesurée dans l'acide sulfurique
Matrice 3 : polyamide 6 étoile obtenu par polymérisation de caprolactame en présence de 2,2,6,6-tétra-(β-carboxyéthyl) cyclohexanone, selon un procédé décrit dans le document FR 2 743077, d'indice de fluidité en fondu de 55 g/10 min à 275°C sous 100 g.
Additif 1 : borate de zinc commercialisé par la société BORAX sous la dénomination Firebrake zB
Additif 2 : particules de dioxyde de titane commercialisées par la société Kronos Europe sous la dénomination Kronos Cl 220
Additif 3 : pigment noir organique commercialisé par la société Bayer sous la dénomination Nigrosine Base BA
Additif 4 : pigment noir inorganique commercialisé par la société Degussa sous la dénomination Printex 85
Additif 5 : mélamine cyanurate commercialisé par la société DSM Melapur sous la dénomination Melapur MC 25

On incorpore de l'additif dans la matrice à l'aide d'un dispositif d'extrusion bi-vis de type Werner et Pfleiderer ZSK40 avec un débit de 30kg/h. La solution concentrée est extrudée sous forme de joncs.

La quantité d'énergie communiquée au système est évaluée à partir de l'intensité électrique (A).

Pour chaque combinaison de matrice et d'additif on détermine la quantité maximale d'additif qu'il est possible d'incorporer. Celle-ci est définie comme la quantité d'additif à partir de laquelle le jonc casse.

Les résultats sont communiqués au tableau I

Tableau I

| Exemple | 1 | 2 | 3 | 4 | 5 | 6 (comparatif) | 7 (comparatif) | 8 (comparatif) | 9 (comparatif) | 10 (comparatif) |
|---|---|---|---|---|---|---|---|---|---|---|
| Matrice | 3 | 3 | 3 | 3 | 3 | 1 | 1 | 2 | 2 | 2 |
| Additif | 1 | 2 | 3 | 4 | 5 | 1 | 2 | 3 | 4 | 5 |
| Température d'extrusion (°C) | 240 | 240 | 230-240 | 230-240 | 230-240 | 240 | 240 | 245-255 | 250-260 | 245-255 |
| Quantité maximale d'additif (%) | 75 | 85 | 60 | 40 | 60 | 65 | 80 | 40 | 25 | 40 |
| Energie (A) | 28 | 14 | 35 | 38 | 29 | 38 | 36 | 39 | 42 | 35 |

La figure 1 représente une photographie d'un jonc observé au microscope SEM comprenant 80% de dioxyde de titane dans la matrice 3. La figure 2 représente une photographie d'un jonc observé au microscope SEM comprenant 80% de dioxyde de titane dans la matrice 1. On observe que le jonc représenté sur la figure 1, selon l'invention présente une surface lisse et dépourvue de cratères.

Exemple 11

A l'aide d'un dispositif d'extrusion de même type que celui utilisé pour les exemples 1 à 10, on introduit 5 % de la solution concentrée de l'exemple 2 dans un polyamide 6.
L'additif dans la composition obtenue présente une excellente dispersion. La figure 3 est une photographie d'une coupe d'un jonc obtenu. La figure 4 est une photographie d'un jonc pareillement obtenu, à partir d'une solution concentrée polyamide selon l'exemple 7. On observe une bien meilleure dispersion de l'additif dans le cadre de l'utilisation de la solution concentrée de l'exemple 2.

Exemple 12

A l'aide d'un dispositif d'extrusion de même type que celui utilisé pour les exemples 1 à 10, on introduit 5 % de la solution concentrée polyamide de l'exemple 1 dans un polyamide 6.
Les compositions présentent une excellente dispersion de l'additif.

Exemple 13 et 14

On réalise des solutions polyamides concentrées à partir d'un ignifugeant à base de phosphore rouge commercialisé par la société Italmatch, et de plusieurs types de matrices décrites précédemment.
On incorpore de l'additif dans la matrice à l'aide d'un dispositif d'extrusion bi-vis de type Werner et Pfleiderer ZSK70, avec un débit de 260 kg/h et une vitesse de rotation de la vis de 150 tours/min. La solution concentrée est extrudée sous forme de joncs.
Pour chaque combinaison de matrice et d'additif on détermine la quantité maximale d'additif qu'il est possible d'incorporer. Celle-ci est définie comme la quantité d'additif à partir de laquelle le jonc casse.
Les résultats sont communiqués au tableau II

Tableau II

| Exemple | 13 | 14 (comparatif) |
|---|---|---|
| Matrice | 3 | 2 |
| Température d'extrusion (°C) | 230-250 | 245-275 |
| Quantité d'additif (%) | 72-75 | 50-53 |
| Pression filière (bars) | 17-19 | 25-28 |
| Quantité maximale d'additif (%) | 80 | 60 |

Exemple 15 et 16

On réalise des solutions polyamides concentrées à partir de plusieurs cires et de plusieurs types de matrices décrites précédemment.
On incorpore de l'additif dans la matrice à l'aide d'un dispositif d'extrusion bi-vis de type Werner et Pfleiderer ZSK40, avec un débit de 30 kg/h. La solution concentrée est extrudée sous forme de joncs.
Température d'extrusion : 250°C
Pour chaque combinaison de matrice et d'additif on détermine la quantité maximale d'additif qu'il est possible d'incorporer. Celle-ci est définie comme la quantité d'additif à partir de laquelle le jonc casse.
Les résultats sont communiqués au tableau III.

Tableau III

| Exemple | 15 | 16 (comparatif) |
|---|---|---|
| Matrice | 3 | 2 |

Tableau III (suite)

| Exemple | 15 | 16 (comparatif) |
|---|---|---|
| Quantité de matrice (%) | 94 | 94 |
| Quantité EBS (éthylène bis steramide) (%) | 3 | 3 |
| Quantité calcium stéarate (%) | 2 | 2 |
| Quantité aluminium stéarate (%) | 1 | 1 |
| Quantité totale de cire (%) | 6 | 6 |
| Quantité maximale totale de cire (%) | 12 | 6 |

Exemple 17 et 18

A l'aide d'un dispositif d'extrusion de même type que celui utilisé pour les exemples 15 et 16, on introduit 10% de la solution concentrée de l'exemple 15 dans un polyamide 66 de viscosité relative 2,7 mesurée dans l'acide sulfurique.

De même on introduit 10% de la solution concentrée de l'exemple 16 dans un polyamide 66 de viscosité relative 2,7 mesurée dans l'acide sulfurique.

La composition obtenue est mise en forme de collier par moulage selon les conditions opératoires suivantes :

- Température moule (eau) : 80°C
- Température fourreau : 320°C
- Temps de maintien : 2s
- Vitesse d'injection : 550cm$^3$/s
- Vitesse de vis : 200 tours/min
- Contre-pression : 5 bars

Les résultats sont communiqués au tableau IV

Tableau IV

| Exemple | 17 | 18 (comparatif) |
|---|---|---|
| Solution concentrée | Identique à l'exemple 15 | Identique à l'exemple 16 |
| Pression d'injection (bars) | 111 | 150 |
| Pression de maintien (bars) | 75 | 75 |
| Temps de cycle (s) | 9 | 9 |

La composition de l'exemple 17 est plus aisée à mouler que la composition de l'exemple 18. La composition 17 possède de plus de bonnes propriétés mécaniques, notamment un bon choc à froid.

## Revendications

1. Procédé de fabrication d'une composition polymère thermoplastique par mélange en fondu d'une solution concentrée et d'un polymère thermoplastique, la solution concentrée comportant une matrice à base de polyamide et un additif choisi parmi les ignifugeants, les pigments, les colorants, les stabilisants, les lubrifiants, les catalyseurs, les aides à la mise en forme, les nucléants, et leurs mélanges, **caractérisée en ce que** la matrice est un composé macromoléculaire comprenant :

   - des chaînes macromoléculaires étoiles ou H comportant un coeur et au moins trois branches polyamides liées au coeur, et
   - éventuellement des chaînes macromoléculaires polyamides linéaires, le rapport en poids entre les chaînes macromoléculaires étoiles et la somme des chaînes macromoléculaires étoiles et linéaires étant compris entre 1 et 0,1 et **en ce que** rindice de fluidité en fondu de la matrice mesuré selon la norme ISO 1133 à 275°C sous (100g) de charge étant supérieur à 20 g/10 min ;

la solution concentrée comprenant au moins 10 % en poids d'additif.

**2.** Procédé selon la revendication 1, **caractérisé en ce que** la matrice est obtenue par copolymérisation à partir d'un mélange de monomères comprenant :

a) un composé multifonctionnel comprenant au moins trois fonctions réactives choisies parmi les amines, les acides carboxyliques, et leurs dérivés, les fonctions réactives étant identiques,
b) des monomères de formules générales (IIa) et (IIb) suivantes :

$$X—R_3—Y \qquad (IIa)$$

ou

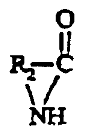

(IIb)

c) éventuellement des monomères de formule générale (III) suivante :

$$Z\text{-}R_3\text{-}Z \qquad (III)$$

dans lesquelles :

- Z représente une fonction identique à celle des fonctions réactives du composé multifonctionnel
- $R_2$, $R_3$ identiques ou différents représentent des radicaux hydrocarbonés aliphatiques, cycloaliphatiques ou aromatiques, substitués ou non, comprenant de 2 à 20 atomes de carbone, et pouvant comprendre des hétéroatomes,
- Y est une fonction amine primaire quand X représente une fonction acide carboxylique, ou
- Y est une fonction acide carboxylique quand X représente une fonction amine primaire,

**3.** Procédé selon la revendication 1, **caractérisé en ce que** la matrice est obtenue par copolymérisation à partir d'un mélange de monomères comprenant :

a) 1 à 50 µmol par gramme de matrice d'un composé multifonctionnel comprenant au moins trois fonctions réactives choisies parmi les amines, les acides carboxyliques et leurs dérivés, les fonctions réactives étant identiques,
b) des lactames et/ou amino-acides
c) un composé multifonctionnel c) choisi parmi les acides dicarboxyliques ou les diamines.
d) un composé monofonctionnel dont la fonction est choisie parmi les amines, les acides carboxyliques et leurs dérivés,

les fonctions de c) et d) étant des amines lorsque les fonctions de a) sont des acides, les fonctions de c) et d) étant des acides lorsque les fonctions de a) sont des amines, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

**4.** Procédé la revendication 1, **caractérisé en ce que** la matrice est obtenue par extrusion d'un polyamide du type de ceux obtenus par polymérisation des lactames et/ou amino-acide avec un composé multifonctionnel comprenant au moins trois fonctions réactives, choisies parmi les amines, les acides carboxyliques et leurs dérivés, les fonctions réactives étant identiques.

**5.** Procédé selon l'une revendications 2 à 4, **caractérisé en ce que** le composé multifonctionnel ou le monomère multifonctionnel présente une structure arborescente ou dendritique.

**6.** Procédé selon la revendication 2 à 4, **caractérisé en ce que** le composé multifonctionnel est représenté par la formule (I)

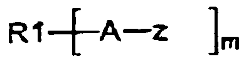 (I)

dans lesquelles :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un groupement carboxylique
- m est un nombre entier compris entre 3 et 8.

**7.** Procédé selon l'une des revendications 2 à 6, **caractérisé en ce que** le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

**8.** Procédé selon l'une des revendications 1 à 7, **caractérisé en ce que** l'additif est un ignifugeant choisi parmi les composés à base de mélamine, les composés halogénés, les composés à base d'oxyde ou d'hydroxyde de magnésium, les composés à base de phosphore rouge, les composés à base de zinc.

**9.** Procédé selon l'une des revendications 1 à 7, **caractérisé en ce que** l'additif est un pigment ou un colorant minéral.

**10.** Procédé selon la revendication 9, **caractérisé en ce que** l'additif est un colorant organique ou organométallique.

**11.** Procédé selon l'une des revendications 1 à 7, **caractérisé en ce que en ce que** l'additif est choisi parmi les stabilisants à la chaleur, les stabilisants à la lumière ou aux UV des polyamides.

**12.** Procédé selon l'une quelconque des revendications 1 à 11, **caractérisé en ce que** le procédé comprend dans une première étape la préparation d'une solution concentrée polyamide, cette étape consistant à introduire la matrice et l'additif dans un dispositif d'extrusion et à extruder le mélange fondu.

**13.** Procédé selon l'une quelconque des revendications 1 à 12, **caractérisé en ce que** le polymère thermoplastique est à base de polyamide.

**14.** Procédé selon la revendication 13, caradérisé en ce que le polyamide est un polymère à base de polyamide 6 ou de polyamide 66.

## Patentansprüche

**1.** Verfahren zur Herstellung einer thermoplastischen Polymerzusammensetzung durch Vermischen im geschmolzenen Zustand von einer konzentrierten Lösung und einem thermoplastischen Polymer, wobei die konzentrierte Lösung eine Matrix auf der Basis von Polyamid und einen Zusatzstoff umfaßt, ausgewählt unter den Flammschutzmitteln, den Pigmenten, den Farbstoffen, den Stabilisatoren, den Gleitmitteln, den Katalysatoren, den Hilfsmitteln zur Formgebung, den Mitteln zur Keimbildung und ihren Mischungen, **dadurch gekennzeichnet, daß** die Matrix eine makromolekulare Verbindung ist, umfassend:

- sternförmige makromolekulare Ketten oder H, umfassend einen Kern und mindestens drei mit dem Kern verbundene Polyamid-Äste, und
- gegebenenfalls lineare makromolekulare Polyamidketten,

wobei das Gewichtsverhältnis zwischen den sternförmigen makromolekularen Ketten und der Summe der sternförmigen und linearen makromolekularen Ketten zwischen 1 und 0,1 beträgt,
und **dadurch**, daß der Fluiditätsindex der Matrix im geschmolzenen Zustand, gemessen nach der Norm ISO 1133 bei 275 °C unter 100 g Belastung über 20 g/10 min beträgt;
und wobei die konzentrierte Lösung mindestens 10 Gew.-% Zusatzstoff umfaßt.

**2.** Verfahren nach Anspruch 1, **dadurch gekennzeichnet, daß** die Matrix durch Copolymerisation ausgehend von einer Mischung von Monomeren erhalten wird, die umfaßt:

a) eine multifunktionelle Verbindung, umfassend mindestens drei reaktive Funktionen, ausgewählt unter den Aminen, den Carbonsäuren und ihren Derivaten, wobei die reaktiven Funktionen identisch sind,

b) Monomere der folgenden allgemeinen Formeln (IIa) und (IIb)

$$X—R_3—Y \quad \text{(IIa)}$$

oder

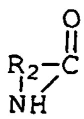

(IIb)

c) gegebenenfalls Monomere der folgenden allgemeinen Formel (III)

$$Z\text{-}R_3\text{-}Z \quad \text{(III)}$$

worin

- Z eine Funktion darstellt, die identisch ist mit den reaktiven Funktionen der multifunktionellen Verbindung,
- $R_2$, $R_3$, gleich oder verschieden, aliphatische, cycloaliphatische oder aromatische, substituierte oder unsubstituierte Kohlenwasserstoff-Reste mit 2 bis 20 Kohlenstoffatomen darstellen, die gegebenenfalls Heteroatome umfassen können,
- Y eine primäre Aminfunktion ist, wenn X eine Carbonsäurefunktion darstellt, oder
- Y eine Carbonsäurefunktion ist, wenn X eine primäre Aminfunktion darstellt.

**3.** Verfahren nach Anspruch 1, **dadurch gekennzeichnet, daß** die Matrix durch Copolymerisation ausgehend von einer Mischung von Monomeren erhalten wird, die umfaßt:

a) 1 bis 50 µmol pro Gramm Matrix einer multifunktionellen Verbindung, umfassend mindestens drei reaktive Funktionen, ausgewählt unter den Aminen, den Carbonsäuren und ihren Derivaten, wobei die reaktiven Funktionen identisch sind,
b) Lactame und/oder Aminosäuren,
c) eine multifunktionelle Verbindung c), ausgewählt unter den Dicarbonsäuren oder den Diaminen,
d) eine monofunktionelle Verbindung, deren Funktion unter den Aminen, den Carbonsäuren und ihren Derivaten ausgewählt wird,

wobei die Funktionen c) und d) Amine sind, wenn die Funktionen a) Säuren sind, die Funktionen c) und d) Säuren sind, wenn die Funktionen a) Amine sind, und wobei das Verhältnis in Äquivalenten zwischen den funktionellen Gruppen von a) und der Summe der funktionellen Gruppen von c) und d) zwischen 1,5 und 0,66 beträgt, und das Verhältnis in Äquivalenten zwischen den funktionellen Gruppen von c) und den funktionellen Gruppen von d) zwischen 0,17 und 1,5 beträgt.

**4.** Verfahren nach Anspruch 1, **dadurch gekennzeichnet, daß** die Matrix durch Extrusion eines Polyamides von

dem Typ erhalten wird, wie er durch Polymerisation von Lactamen und/oder Aminosäuren mit einer multifunktionellen Verbindung, umfassend mindestens drei reaktive Funktionen, ausgewählt unter den Aminen, den Carbonsäuren und ihren Derivaten, wobei die reaktiven Funktionen identisch sind, erhalten wird.

**5.** Verfahren nach einem der Ansprüche 2 bis 4, **dadurch gekennzeichnet, daß** die multifunktionelle Verbindung oder das multifunktionelle Monomer eine baumartige oder dendritische Struktur aufweisen.

**6.** Verfahren nach Anspruch 2 bis 4, **dadurch gekennzeichnet, daß** die multifunktionelle Verbindung durch die Formel (I)

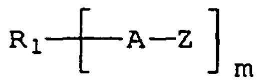 (I)

dargestellt wird, in der

- $R_1$ ein Kohlenwasserstoff-Rest ist, umfassend mindestens zwei lineare oder cyclische, aromatische oder aliphatische Kohlenstoffatome, der Heteroatome umfassen kann,
- A ein kovalente Bindung oder ein aliphatischer Kohlenwasserstoff-Rest mit 1 bis 6 Kohlenstoffatomen ist,
- Z einen primären Aminrest oder eine Carboxylgruppe darstellt,
- m eine ganze Zahl zwischen 3 und 8 ist.

**7.** Verfahren nach einem der Ansprüche 2 bis 6, **dadurch gekennzeichnet, daß** die multifunktionelle Verbindung ausgewählt wird unter 2,2,6,6-Tetra-(β-carboxyethyl)-cyclohexanon, Trimesinsäure, 2,4,6-Tri-(aminocapronsäure)-1,3,5-triazin und 4-Aminoethyl-1,8-octandiamin.

**8.** Verfahren nach einem der Ansprüche 1 bis 7, **dadurch gekennzeichnet, daß** der Zusatzstoff ein Flammschutzmittel ist, ausgewählt unter den Verbindungen auf der Basis von Melamin, den halogenierten Verbindungen, den Verbindungen auf der Basis von Magnesiumoxid oder Magnesiumhydroxid, den Verbindungen auf der Basis von rotem Phosphor und den Verbindungen auf der Basis von Zink.

**9.** Verfahren nach einem der Ansprüche 1 bis 7, **dadurch gekennzeichnet, daß** der Zusatzstoff ein Pigment oder ein mineralischer Farbstoff ist.

**10.** Verfahren nach Anspruch 9, **dadurch gekennzeichnet, daß** der Zusatzstoff ein organischer oder organometallischer Farbstoff ist.

**11.** Verfahren nach einem der Ansprüche 1 bis 7, **dadurch gekennzeichnet, daß** der Zusatzstoff unter den Stabilisatoren der Polyamide gegenüber Wärme, gegenüber Licht oder UV-Strahlen ausgewählt wird.

**12.** Verfahren nach irgendeinem der Ansprüche 1 bis 11, **dadurch gekennzeichnet, daß** das Verfahren in einer ersten Stufe die Herstellung einer konzentrierten Polyamidlösung umfaßt, wobei diese Stufe darin besteht, die Matrix und den Zusatzstoff in eine Extrusionsvorrichtung einzubringen und die geschmolzene Mischung zu extrudieren.

**13.** Verfahren nach irgendeinem der Ansprüche 1 bis 12, **dadurch gekennzeichnet, daß** das thermoplastische Polymer auf der Basis von Polyamid besteht.

**14.** Verfahren nach Anspruch 13, **dadurch gekennzeichnet, daß** das Polyamid ein Polymer auf der Basis von Polyamid 6 oder Polyamid 66 ist.

## Claims

**1.** Method for producing a thermoplastic polymer composition by melt-blending a concentrated solution and a thermoplastic polymer, the concentrated solution comprising a polyamide-based matrix and an additive chosen from fire retardants, pigments, dyes, stabilizers, lubricants, catalysts, processing aids, nucleating agents and mixtures thereof, **characterized in that** the matrix is a macromolecular compound comprising

- star-configured or H-configured macromolecular chains comprising a core and at least three polyamide branches linked to the core, and
- optionally, linear polyamide macromolecular chains,

the weight ratio of the star-configured macromolecular chains to the sum of the star-configured and linear macromolecular chains being between 1 and 0.1, and **in that** the melt flow index of the matrix, measured according to the ISO 1133 standard at 275°C, under a load of 100 g, is greater than 20 g/10 min,

the concentrated solution comprising at least 10% by weight of additive.

**2.** Method according to Claim 1, **characterized in that** the matrix is obtained by copolymerization starting with a monomer mixture comprising:

a) a multifunctional compound comprising at least three reactive functional groups chosen from amines, carboxylic acids, and mixtures thereof, all the reactive functional groups being identical,
b) monomers of the following general formulae (IIa) and (IIb) :

$$X—R_2—Y \quad \text{(IIa)}$$

or

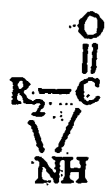

(IIb)

c) optionally, monomers of the following general formula (III):

$$Z\text{-}R_3\text{-}Z \quad \text{(III)}$$

in which:

- Z represents a functional group identical to that of the reactive functional groups of the multifunctional compound,
- $R_2$ and $R_3$, which may be identical or different, represent substituted or unsubstituted, aliphatic, cycloaliphatic or aromatic hydrocarbon radicals containing from 2 to 20 carbon atoms, and possibly including hetero atoms,
- Y is a primary amine functional group when X represents a carboxylic acid functional group, or
- Y is a carboxylic acid functional group when X represents a primary amine functional group.

**3.** Method according to Claim 1, **characterized in that** the matrix is obtained by copolymerization starting with a monomer mixture comprising:

a) 1 to 50 µmol per gram of matrix of a multifunctional compound comprising at least three reactive functional groups chosen from amines, carboxylic acids and derivatives thereof, the reactive functional groups being identical;
b) lactams and/or amino acids;
c) a multifunctional compound c) chosen from dicarboxylic acids or diamines;
d) a monofunctional compound, the functional group of which is chosen from amines, carboxylic acids and derivatives thereof,

the functional groups of c) and d) being amines when the functional groups of a) are acids, the functional groups of c) and d) being acids when the functional groups of a) are amines, the ratio in terms of equivalents of

the functional groups of a) to the sum of the functional groups of c) and d) being between 1.5 and 0.66, and the ratio in terms of equivalents of the functional groups of c) to the functional groups of d) being between 0.17 and 1.5.

4. Method according to Claim 1, **characterized in that** the matrix is obtained by extrusion of a polyamide of the type of those obtained by polymerization of lactams and/or amino acids with a multifunctional compound comprising at least three reactive functional groups chosen from amines, carboxylic acids and derivatives thereof, the reactive functional groups being identical.

5. Method according to one of Claims 2 to 4, **characterized in that** the multifunctional compound or the multifunctional monomer has a dendritic or tree structure.

6. Method according to Claims 2 to 4, **characterized in that** the multifunctional compound is represented by formula (I):

$$R1 - [A - z]_m \qquad (I)$$

in which:

- $R_1$ is an aromatic or aliphatic, linear or cyclic, hydrocarbon radical containing at least two carbon atoms and possibly including hetero atoms;
- A is a covalent bond or an aliphatic hydrocarbon radical containing from 1 to 6 carbon atoms;
- Z represents a primary amine functional group or a carboxylic acid functional group;
- m is an integer between 3 and 8.

7. Method according to one of Claims 2 to 6, **characterized in that** the multifunctional compound is chosen from 2,2,6,6-tetra-(β-carboxyethyl)cyclohexanone, trimesic acid, 1,3,5-triazine-2,4,6-tri(aminocaproic acid) and 4-aminoethyl-1,8-octanediamine.

8. Method according to one of Claims 1 to 7, **characterized in that** the additive is a fire-retardant chosen from melamine-based compounds, halogenated compounds, compounds based on magnesium oxide or hydroxide, red phosphorous-based compounds and zinc-based compounds.

9. Method according to one of Claims 1 to 7, **characterized in that** the additive is a mineral dye or pigment.

10. Method according to Claim 9, **characterized in that** the additive is an organic or organometallic dye.

11. Method according to one of Claims 1 to 7, **characterized in that** the additive is chosen from heat-stabilizers and light- or UV-stabilizers for polyamides.

12. Method according to any one of Claims 1 to 11, **characterized in that** the method comprises, in a first step, the preparation of a concentrated polyamide solution, this step consisting in introducing the matrix and the additive into an extruder and extruding the melted blend.

13. Method according to any one of claims 1 to 12, **characterized in that** the thermoplastic polymer is polyamide-based.

14. Method according to claim 13, **characterized in that** the polyamide is a polymer based on polyamide 6 or on polyamide 66.

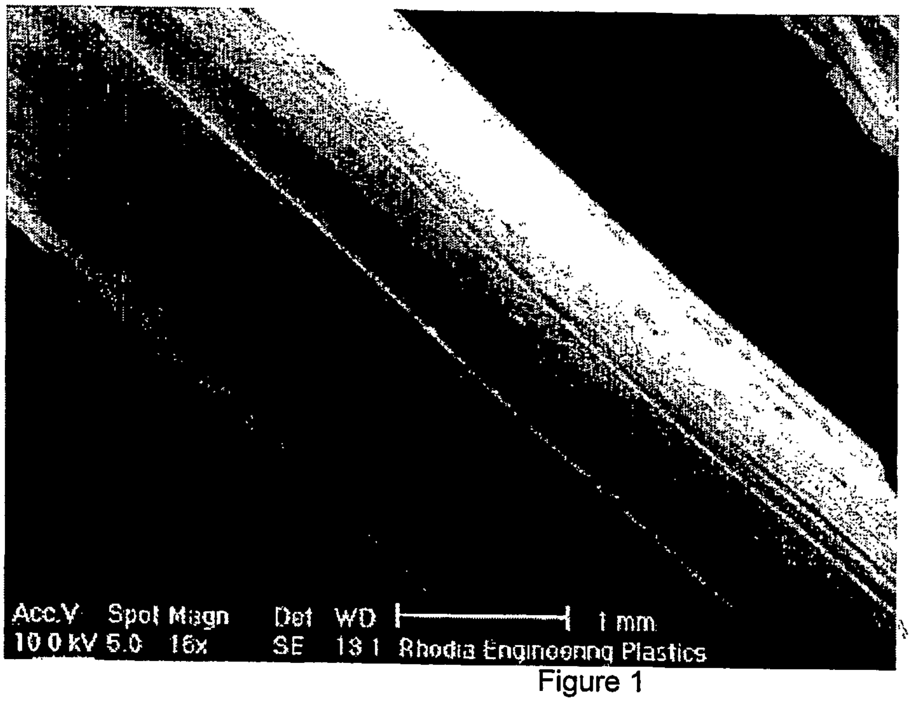

Figure 1

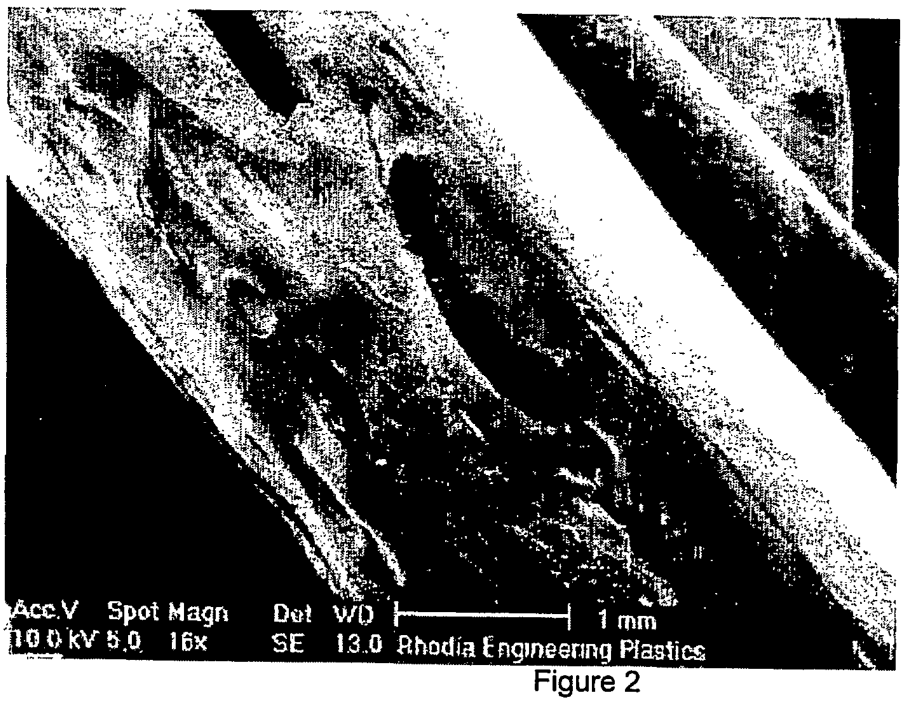

Figure 2

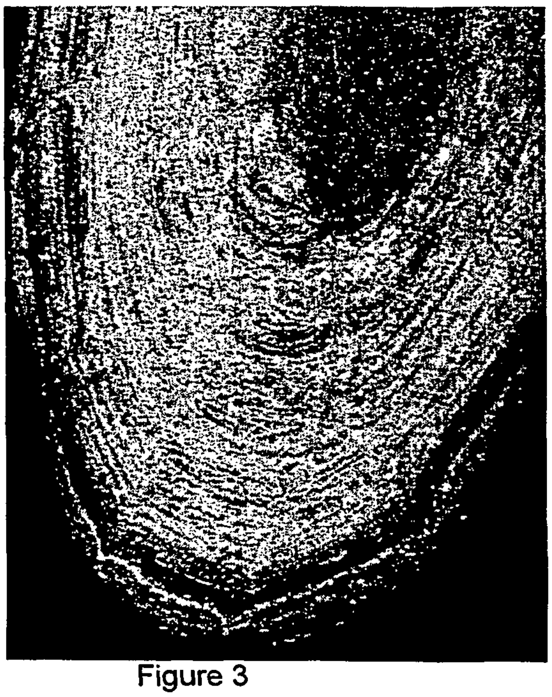

Figure 3

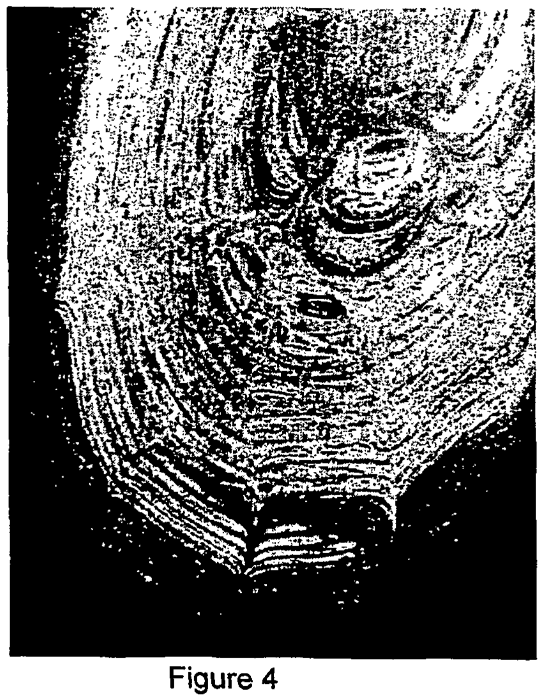

Figure 4